# EUROPEAN PATENT APPLICATION

(11) **EP 2 629 242 A1**
(43) Date of publication of application: **21.08.2013**
(21) Application number: 13275033.2
(22) Date of filing: 15.02.2013
(51) Int. Cl.: G06K 9/00

(54) **A user wearable visual assistance device and method**

(30) Priority: 16.02.2012 US 201213397919; 17.02.2012 EP 12275016
(71) Applicant: Orcam Technologies Ltd., 91450 Jerusalem (IL)
(72) Inventor: Wexler, Yonatan, 91450 Jerusalem (IL); Shashua, Amnon, 90805 Mevasseret Zion (IL); Tadmor, Oren, 91450 Jerusalem (IL); Ehrlich, Itai, 91450 Jerusalem (IL)
(74) Representative: Grainger, David Fraser

(57) **Abstract**

A device wearable by a person including a processor (16) operatively connectible to a camera (12). The processor (16) is adapted to capture multiple image frames (14), is operable to detect motion of a gesture by using differences between the image frames (14) and to classify the gesture responsive to the detected motion.

## Description

### BACKGROUND

### 1. Technical Field

The present invention relates to a user wearable visual assistance device and method. Embodiments of the present invention relate to vision processing.

### 2. Description of Related Art

The visually impaired suffer from difficulties due to lack of visual acuity, field of view, color perception and other forms of visual impairments. These challenges impact life in many aspects for example mobility, risk of injury, independence and situational awareness in everyday life.

Many products offer solutions in the realm of mobility such as global positioning system (GPS), obstacle detection without performing recognition, and screen readers. These products may lack certain crucial aspects to integrate fully and seamlessly into the life of a visually impaired person.

Thus, there is a need for and it would be advantageous to have a device which enhances quality of life for the visually impaired.

### BRIEF SUMMARY

The present invention seeks to provide an improved wearable device and method.

According to an aspect of the invention, there is provided a method as in claim 1.

According to an aspect of the invention, there is provided a device as in claim 13.

Various methods for visually assisting a person are provided for herein using a device wearable by the person. The device includes a processor connectible to a camera. The processor is adapted to capture multiple image frames. Motion of a gesture is detected by using differences between the image frames. The gesture may be classified (recognized or re-recognized) responsive to the detected motion. The motion of the gesture may be repetitive. The gesture may include waving an object in the field of view of the camera and the object being held may be classified by the device. The motion detection and classification of the gesture and/or object are performed while avoiding pressing of a button on the device.

The gesture may include holding an object in a hand of the person, enabling the person to audibly name the object and recording the name. Upon failing to recognize the gesture and/or to classify the object being held the person may be provided feedback by the device. Alternatively, or in addition upon succeeding to recognize the gesture and/or to classify the object, the person may be provided feedback by the device.. The person may train a classifier by audibly naming the object. The motion detection may include: tracking the image motion between the image frames and grouping the image motion into groups. The groups include similar image movement. The person may be notified of an attribute related to the gesture and/or the object being held.

Various devices are provided for herein wearable by the person The device includes a processor operatively connectible to a camera. The processor is adapted to capture multiple image frames, to detect motion of a gesture by using differences between the image frames and to classify the gesture responsive to the detected motion. The motion of the gesture may be repetitive. A bone conduction headphone may be attached to the processor. The device may detect an object and recognize the object. The processor audibly informs the person by utilizing the bone conduction headphone to name the object.

Various methods are provided for herein of using a device including a camera and a processor. The device is wearable for a person. Upon presenting an object to the device for a first time, the object is detected. Upon detection of the object, the person may label the object using a sound. The sound may be recorded by the device to produce a recorded sound. Upon presenting the (same or similar) object a second time to the device, the object is recognized. Upon recognizing the object , the recorded sound is played by the device for hearing by the person. Upon the second presentation of the object, the device may notify the person of an attribute of the device.

The first and/or second presentation may include moving the object in the field of view of the camera, and the motion triggers the device to act in response.

Prior to the detection of the object, image motion of the image of the object may be tracked between the image frames. The image of the object may be separated from image background responsive to the tracked image motion of the images of the object.

The first and/or second presentations of the object may include inserting the object into the field of view of the camera and the insertion of the object into the field of view of the camera triggers the device to act in response.

When the object is successfully recognized and/or not successfully recognized by the device, feedback may be provided accordingly to the person by playing an audible sound to the person indicating that the object is recognized or not recognized. The device may include and may manage a data base of objects personal to the person, The objects of the database when presented to the device are recognizable by the device.

### BRIEF DESCRIPTION OF THE DRAWINGS

Embodiments of the invention are herein described, by way of example only, with reference to the accompanying drawings, wherein:
Figure 1 shows a system diagram, according to embodiments of the present invention;
Figure 2a shows an isometric view of an apparatus, according a feature of an embodiment of the present invention;
Figure 2b shows an alternative isometric view of the apparatus shown in Figure 2a, according to a feature of an embodiment of the present invention;
Figure 3 shows eyeglasses retrofit according to a feature of an embodiment of the present invention;
Figure 4 shows retrofit of eyeglasses shown in Figure 3 with a portion of the apparatus shown in figures 2a and 2b, according to a feature of an embodiment of the present invention;
Figure 5a-5c, Figure 6 and Figures 7-8 are flow diagrams which illustrate processes according to different features of embodiments of the present invention;
Figure 9a shows a person wearing eyeglasses retrofit as shown in Figure 4 and gesturing, according to a feature of an embodiment of the present invention;
Figures 9b-9e show other possible hand gestures in the visual field of the camera, according to different embodiments of the present invention;
Figures 10-14 shows further examples of a person wearing and using the device of Figure 4 for detecting and recognizing text, a bus, a bank note, a traffic signal and holding an object, according to different embodiments of the present invention;
Figures 15a and 15b illustrate image frames according to different embodiments of the present invention;
Figure 16a illustrates a process in which a user names an object being held, according to a feature of an embodiment of the present invention;
Figure 16b illustrates a process in which the device recognizes the object previously held in the process of Figure 16a, according to a feature of an embodiment of the present invention;
Figure 17a shows a flow diagram of a method of detecting gesture motion, according to a feature of an embodiment of the present invention;
Figure 17b shows an aspect of the detection step of the method illustrated in Figure 17a in greater detail;
Figure 18a shows a flow diagram of a method, according to a feature of an embodiment of the present invention;
Figure 18b shows a flow diagram of a method which provides greater detail to a step of the method illustrated in Figure 18a, according to a feature of an embodiment of the present invention; and
Figure 18c shows a flow diagram of a method which provides greater detail to a step of the method illustrated in Figure 18b, according to a feature of an embodiment of the present invention.

### DETAILED DESCRIPTION

Reference will now be made in detail to features of embodiments of the present invention, examples of which are illustrated in the accompanying drawings, wherein like reference numerals refer to the like elements throughout. The features are described below to explain embodiments of the present invention by referring to the figures.

Before explaining features of embodiments of the invention in detail, it is to be understood that the invention is not limited in its application to the details of design and the arrangement of the components set forth in the following description or illustrated in the drawings. The invention is capable of other features or of being practiced or carried out in various ways. Also, it is to be understood that the phraseology and terminology employed herein is for the purpose of description and should not be regarded as limiting.

By way of introduction, embodiments of the present invention utilize a user-machine interface in which the existence of an object in the environment of a user and a hand gesture trigger the device to notify the user regarding an attribute of the object. The device may be adapted to learn the preferences of the user. In that sense, the device is extensible and gradually suits the user better with use, since the preferences of the user may be learned in time with use of the device.

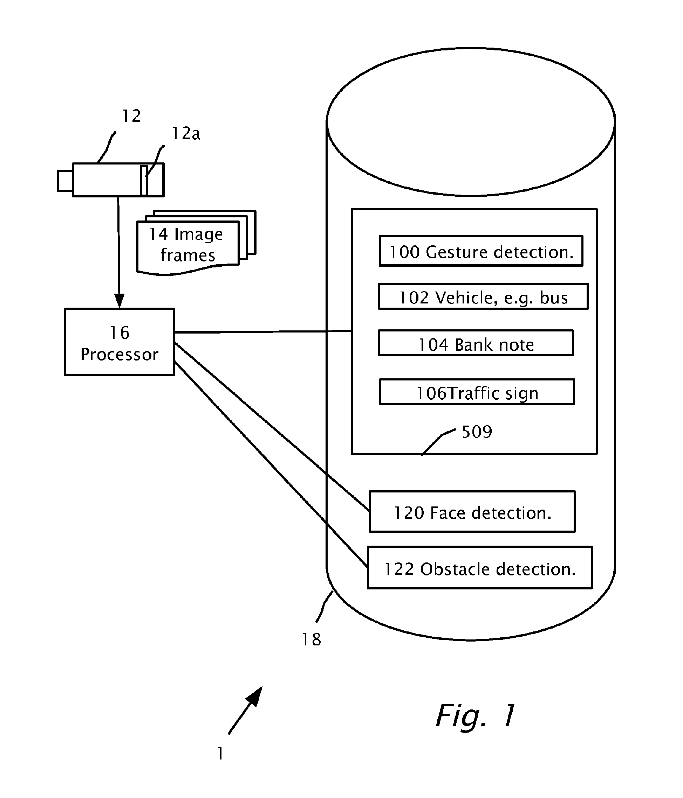

Reference is now made to Figure 1 which illustrates a system **1,** according to a feature of an embodiment of the present invention. A camera **12** with image sensor **12a** captures image frames **14** in a forward view of camera **12.** Camera **12** may be a monochrome camera, a red green blue (RGB) camera or a near infra red (NIR) camera. Image frames **14** are captured and transferred to processor **16** to be processed. The processing of image frames **14** may be based upon algorithms in memory or storage **18.** Storage **18** is shown to include a classifier **509** which may include gesture detection **100,** vehicle detection and recognition **102,** bank note detection and recognition **104** and/ or traffic sign detection and recognition **106.** Classifier **509** may be a multi-class classifier and may include, for example, multiple classes of different images of different objects including bank notes, vehicles, *e.g.* buses, traffic signs and/or signals, and gestures. Another classifier may be available for face detection **120.** A method may be available for obstacle detection **122** with or without use of an additional sensor (not shown)

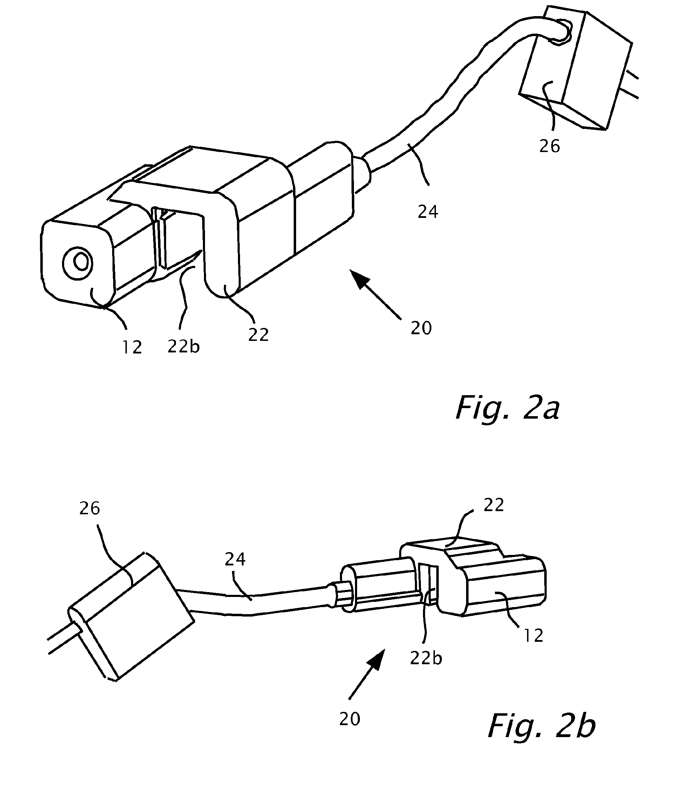

Reference is now made to Figure 2a which shows a view of an apparatus **20,** according a feature of an embodiment of the present invention. Camera **12** may be located in a housing which is attached to a mount **22.** Mount **22** connects electrically to an audio unit **26** via a cable **24.** A slot **22b** is located between camera **12** and mount **22.** Both camera **12** and audio unit **26** may be operatively connected to processor **16** and optionally to storage **18.** Processor **16** and storage **18** may be a custom unit or alternatively may be part of a mobile computer system, *e.g.* smart phone. Audio unit **26** (not shown) may be an audio speaker which may be in close proximity to and/ or attached the ear of the user or located and attached at the bend in arm **32.** In other embodiments, audio unit **26** may be a bone conducting headphone set which may conduct through to one ear or to both ears of the person. Unit **26** may also be a earphone connected to processor **16** by a wireless connection, *e.g.* BlueTooth^{RTM}.

Reference is now made to Figure 2b which shows an alternative view of apparatus **20,** showing camera **12,** mount **22,** slot **22b,** cable **24** and audio unit **26,** according to a feature of an embodiment of the present invention.

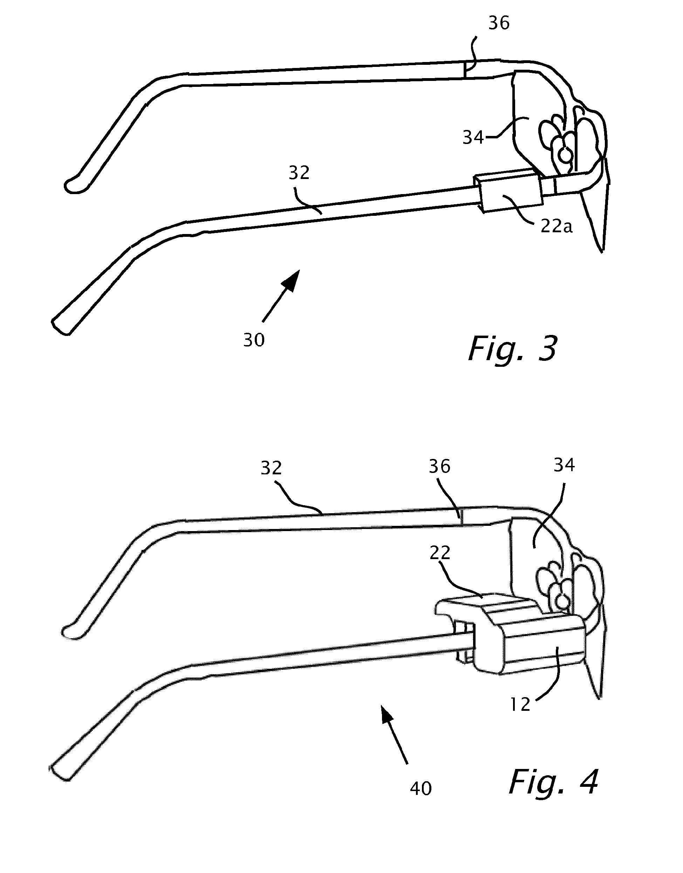

Reference is now made to Figure 3 which shows eyeglasses **30** retrofit according to a feature of an embodiment of the present invention. Eyeglasses **30** have two arms **32** connected to the frame front of eyeglasses **30** with hinges **36.** The frame front hold the lenses **34** of eyeglasses **30.** A docking component **22a** is attached to an arm **32** near to the frame front but just before hinge **36.**

Reference is now made to Figure 4 which shows a device **40** of eyeglasses retrofit with an apparatus according to a feature of an embodiment of the present invention. Camera **12** may be docked on docking component **22a** so that slot **22b** between mount **22** and camera **12** slides onto docking component **22a.** A magnetic connection between the slot and docking component **22a** may allow camera **12** and mount **22** to be attachable, detachable and re-attachable to eyeglasses **30** via docking component **22a.** In other embodiments, a spring loaded strip located in the slot or on either side of docking component **22a** (located behind hinge **36)** may be utilized to allow camera **12** to be attachable, detachable and re-attachable to eyeglasses **30.** Any other means known in the art of mechanical design may alternatively or additionally be utilized to allow camera **12** to be attachable, detachable and re-attachable to eyeglasses **30.** Camera **12** is therefore, located to capture images frames **14** with a view which may be substantially the same view (provided through lenses **34** if applicable) of the person wearing eyeglasses **30.** Camera **12** is therefore, located to minimize parallax error between the view of the person and view of camera **12.**

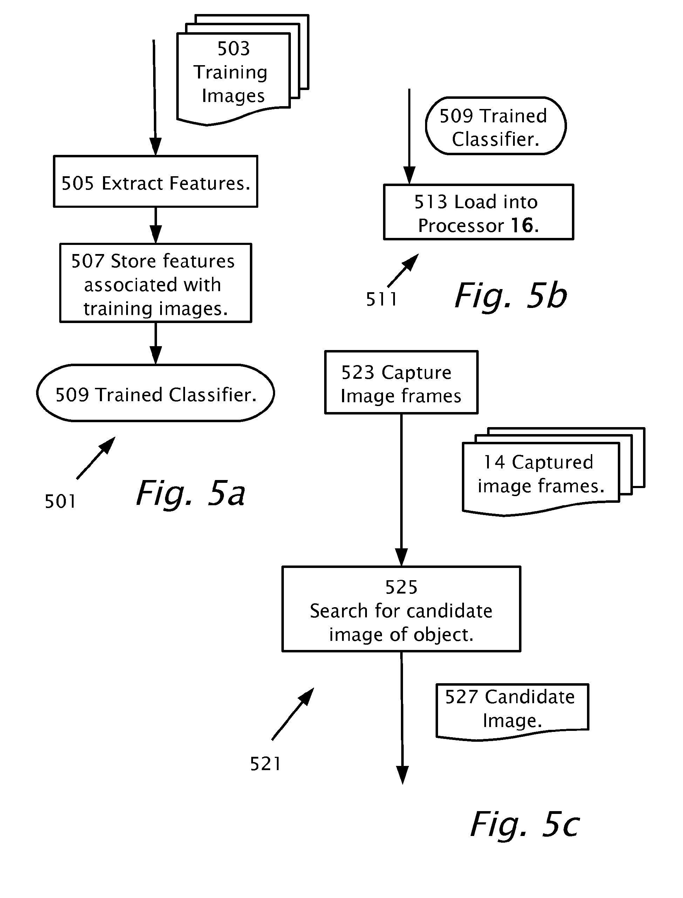

Reference is now made to Figure 5a which shows a method **501** for training a multi-class classifier **509,** according to a feature of an embodiment of the present invention. Training of classifier **509** is performed prior to using trained classifier **509** to classify for example gestures, bank notes, vehicles, particularly buses and/or traffic signals or traffic signs. Training images **503,** for example of bank notes for a particular country, are provided and image features of the bank notes are extracted in step **505.** Features extracted (step **505)** from training images **503** may include optical gradients, intensity, color, texture and contrast for example. Features of the bank notes for a particular country may be stored (step **507)** to produce a trained classifier **509.** A similar exercise may be performed for steps **503** and **505** with respect to hand gestures. Features of hand gestures may be stored (step **507)** to produce a. trained classifier **509.** An example of a multi-class classifier **509** which may be produced includes the extracted features of both bank notes as one class of objects and hand gestures as another class of objects.

Optical flow or differences between image frames **14** may be further used for classification for example to detect and recognize gesture motion or to detect and recognize the color change of a traffic signal

Reference is now made to Figure 5b, which shows a method **511,** according to a feature of an embodiment of the present invention. In step **513,** trained classifier **509** is loaded into processor **16.**

Reference is now made to Figure 5c, which shows a method **521,** according to a feature of an embodiment of the present invention. With trained classifier **509** loaded into processor **16** (step **513),** image frames **14** are captured in step **523** of various possible visual fields of the person wearing device **40.** The captured image frames **14** are then used to search (step **525)** for a candidate image **527** for an object found in the image frames **14.** Further processing of candidate images **527** are shown in the description that follows.

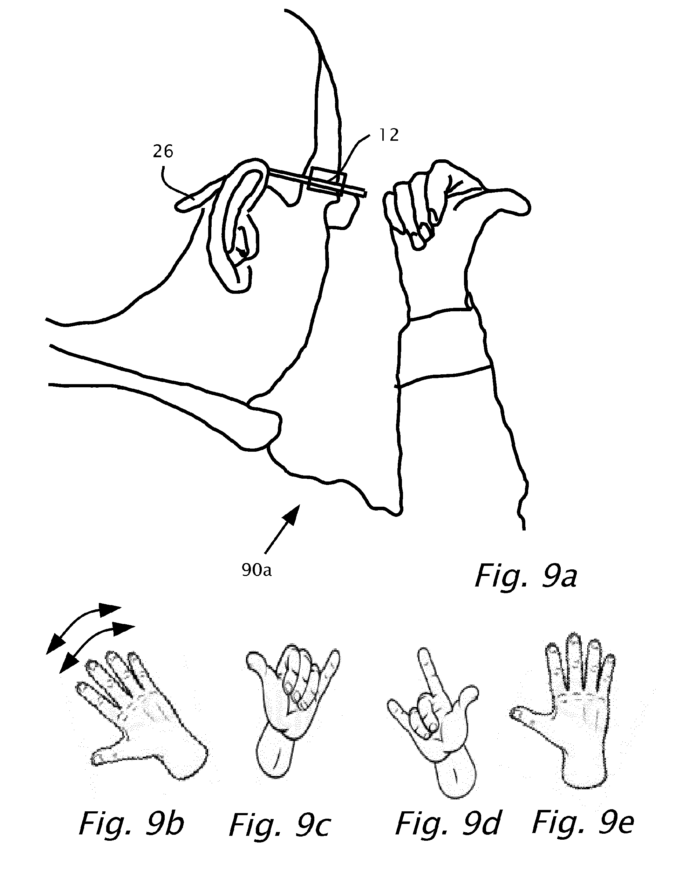

Reference is now made to Figure 9a which shows a person wearing device **40** and visual field **90a** of camera **12.** The person is presenting a hand gesture in the field of view of camera **12.** The gesture shown for example being the right hand palm side of the person with fingers closed and the thumb pointing out to the right. Figures 9b-9e show other example hand gestures which may be in visual field **90a** of the person and camera **12.** Figure 9b shows the back or dorsal part of an open right hand which is being waved from side to side. Figure 9c shows a palm side of a left hand with thumb and little finger extended. Figure 9d shows a palm side of a right hand with thumb, little finger and index finger extended. Figure 9e shows the back or dorsal part of an open right hand which is stationary.

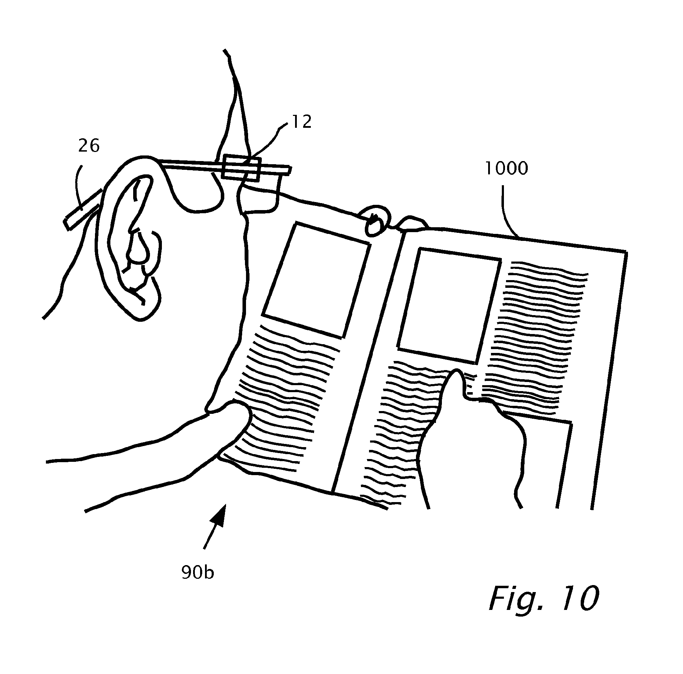

Reference is now made to Figure 10 which shows a visual field **90b** of a person wearing device **40.** Visual field **90c** of the person includes a document **1000** and the pointing of the index finger of the right hand to text in document **1000.** Document **1000** in this case is a book but also may be a timetable, notice on a wall or a text on some signage in close proximity to the person such as text on the label of a can for example.

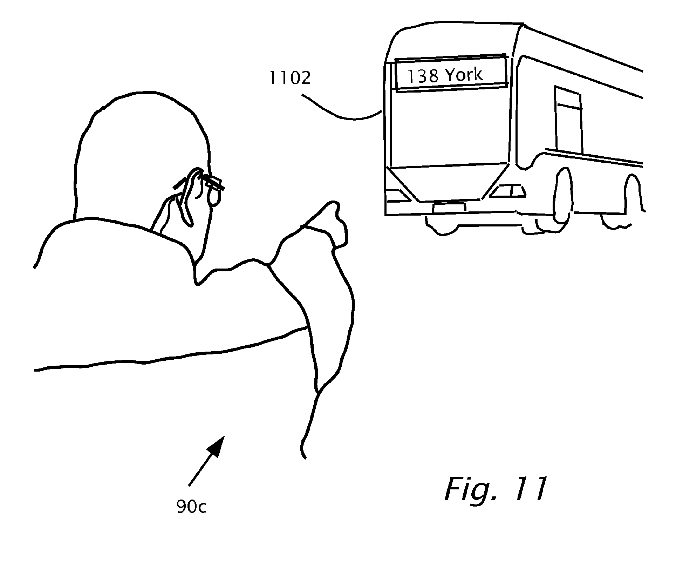

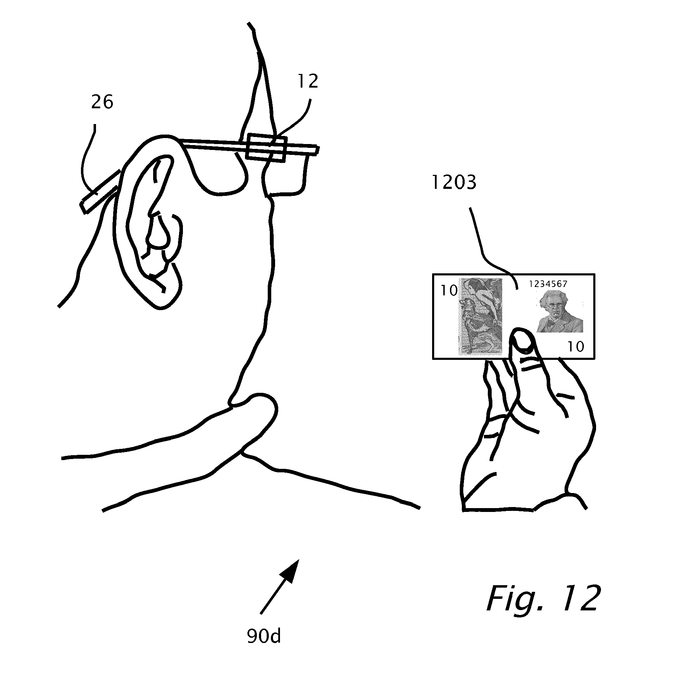

Reference is now made to Figure 11 which shows a visual field **90c** of a person wearing device **40.** Here visual field **90c** includes a bus **1102** and the pointing of the index finger of the right in the general direction of bus **1102.** Bus **1102** also includes a text such as the bus number and destination. The text may also include details of the route of bus **1102.** Reference is now made to Figure 12 which shows a visual field **90d** of a person wearing device **40.** Visual field **90d** includes the person holding a banknote **1203** or visual field **90d** may have banknote **1203** on a counter top or in the hands of another person such as shop assistant for example.

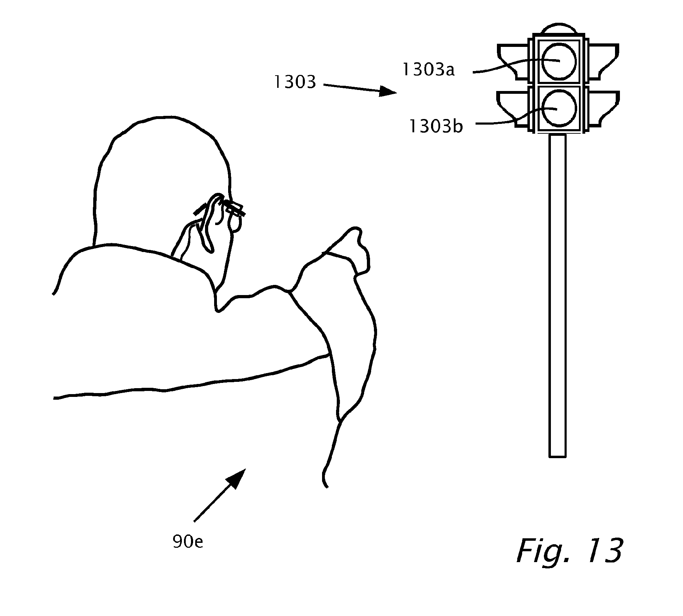

Reference is now made to Figure 13 which shows a visual field **90e** of a person wearing device **40.** Here visual field **90c** includes a traffic signal **1303** and the pointing of the index finger of the right in the general direction of traffic signal **1303.** Here traffic signal has two sign lights **1303a** (red) and **1303b** (green) which may be indicative of a pedestrian crossing sign or alternatively traffic signal **1303** may have three sign lights (red, amber, green) indicative of a traffic sign used by vehicles as well as pedestrians.

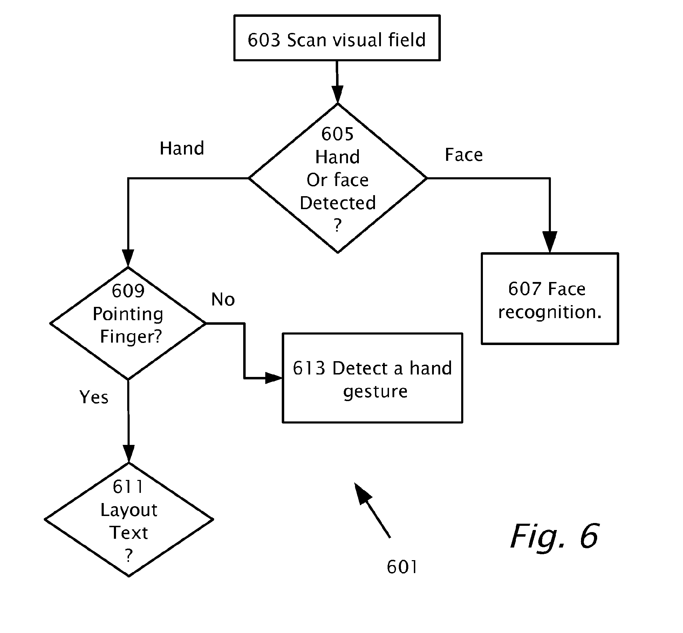

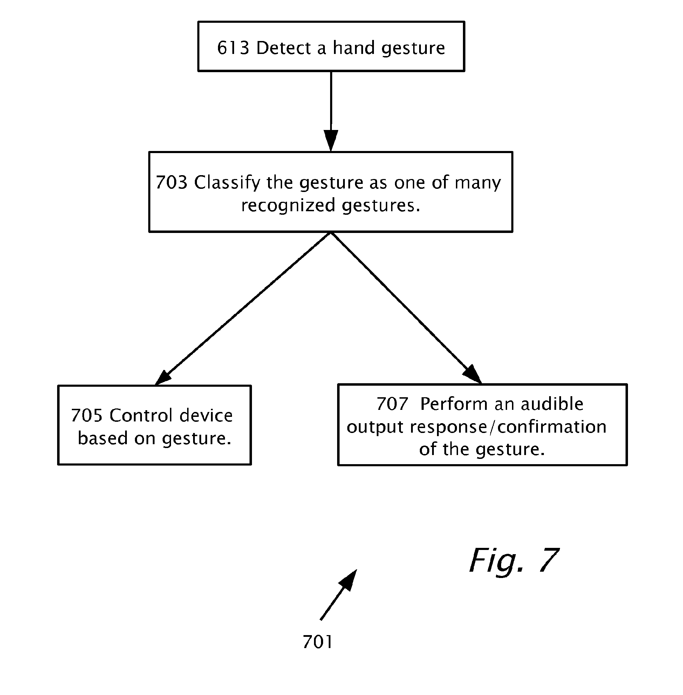

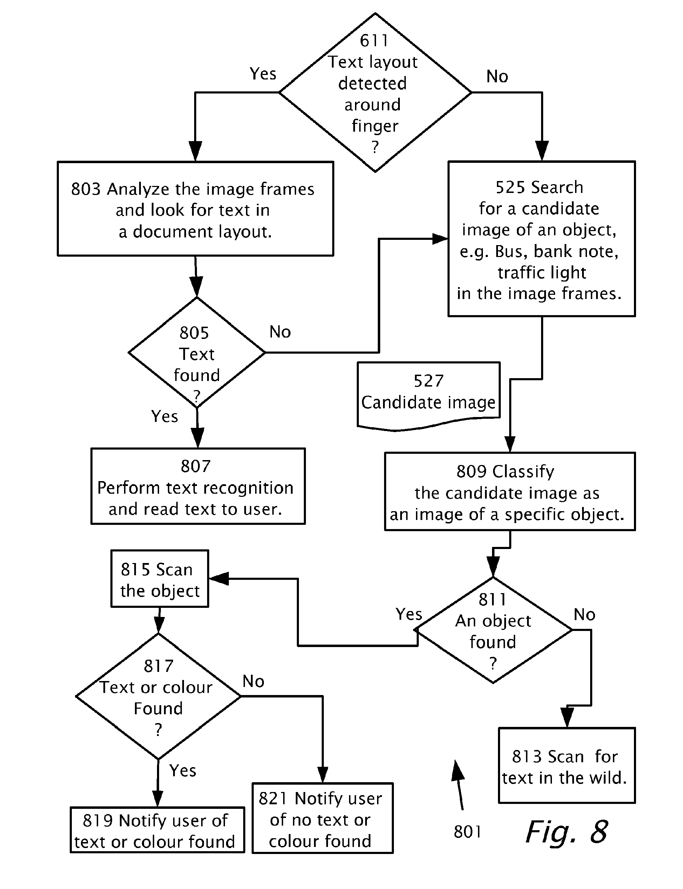

Reference is now made to Figure 6 which shows a method **601,** according to a feature of an embodiment of the present invention. In step **603** the visual field **90** of the person and camera **12** may be scanned while device **40** is worn by the person. In decision block **605** a decision is made to determine if an object detected in visual field **90** is either a hand of the person or a face of another person. If the object detected is the face of another person, facial recognition of the other person may be performed in step **607.** Facial recognition step **607** may make use of classifier **120** which has been previously trained to recognize faces of people who are known to the person. If the object detected in visual field **90** is a hand of the person, in decision box **609** it may be determined if the hand gesture is a pointing finger gesture or not. The pointing finger may be for instance a pointing index finger of the right hand or left hand of the person. If the hand does not include a pointing finger, then hand gestures may be detected starting in step **613** the flow of which continues in Figure 7. If the finger is pointing to an attribute such as a text layout in decision box **611,** the flow continues in Figure 8.

Reference is now made to Figure 7 which shows a method **701,** according to a feature of an embodiment of the present invention. Method **701** is a continuation of step **613** shown in Figure 6. In step **613** a hand gesture of a user is detected and recognized to not include a pointing finger. In step **703** the hand gesture may be classified as one of many recognizable gestures of trained classifier **509.** Recognizing the hand gesture as one of many hand gestures may simultaneously provide control (step **705)** of device **40** based on the hand gesture as well as providing an audible output via audio unit **26** in response to and/ or in confirmation of the hand gesture (step **707).** In step **705,** control of device **40** may include gestures to recognize colours, to stop a process of recognizing just buses for example, increase the volume of unit **26,** to stop and/ or start reading recognized text, to start recording video or to take a picture. In step **707,** the audible output may be click sound, bleep, a one word confirmation or to notify the person that a specific mode has been entered, such as just looking for buses and bus numbers for example. Audible output response in step **707** may alternatively or in addition include information or data related to a recognized object.

Reference is now made to Figure 8 which shows a method **801,** according to a feature of en embodiment of the present invention. Method **801** shows the continuation of decision step **611** shown in Figure 6. Decision step **611** is reached by virtue of finding a finger pointing in visual field **90** in step **609.** In decision step **611** it is determined if a text layout is detected around a pointing finger and if so, the resolution of camera **12** may be increased to enable analysis (step **803)** of image frames **14** so as to look for example for a block of text within the text layout of a document. If text is found in decision block **805,** recognition of the text is performed in step **807** and the text may be read to the person via audio unit **26.** The index finger may be used to point to which specific portion of text to be recognized and to be read in the document.

In both decision boxes **805** and **611,** if no text is found, a search for a candidate image **527** in the field of view **90** for an object may be performed in step **525.** The search in step **525** may be made with a lower resolution of camera **12** to enable searching of the object in image frames **14.** The object may be a vehicle such as a bus, a bank note and/ or traffic light shown in views **90c, 90d** and **90e** respectively for example. The candidate image **527** may then be classified in step **809,** using classifier **509** as an image of a specific object. Additionally, the person may track the candidate image to provide a tracked candidate image in the image frames **14.** The tracking may be based on sound perception, partial vision or situational awareness by orienting the head-worn camera **12** in the direction of the object. The tracked candidate image may be then selected for classification and recognition.

In decision block **811,** if an object is found, it may be possible to inform the person what the object is (bus **1102,** bank note **1203** or traffic signal **1303** for example) and to scan the object (step **815)** for attributes of the object such as text, colour or texture. If text and/or colour is found, in decision **817** on or for the object, the user may be audibly notified (step **819)** via audio unit **26** and the recognized text may be read to the person. In the case of bus **1102** the bus number may be read along with the destination or route based on recognized text and/ or colour of the bus. In the case of bank note **1203** the denomination of the bank note (5 British pounds or 5 American dollars) may be read to the person based on recognized text and/ or colour or texture of the bank note. In the case of traffic signal **1303** based on the colour of traffic signal **1303** or a combination colour and/ or text of traffic signal **1303** to stop or to walk.

If no text is found on the object then the user may be audibly notified (step **821)** via audio unit **26** that no text has been found on the object. In decision step **811,** if no object is found, then a scan for any text in the image frames **14** may be made in step **813.** Decision step **817** may be run again after step **813** to notify of text (step **819)** and unit 26 to read the text or notify (step **821)** of no text found.

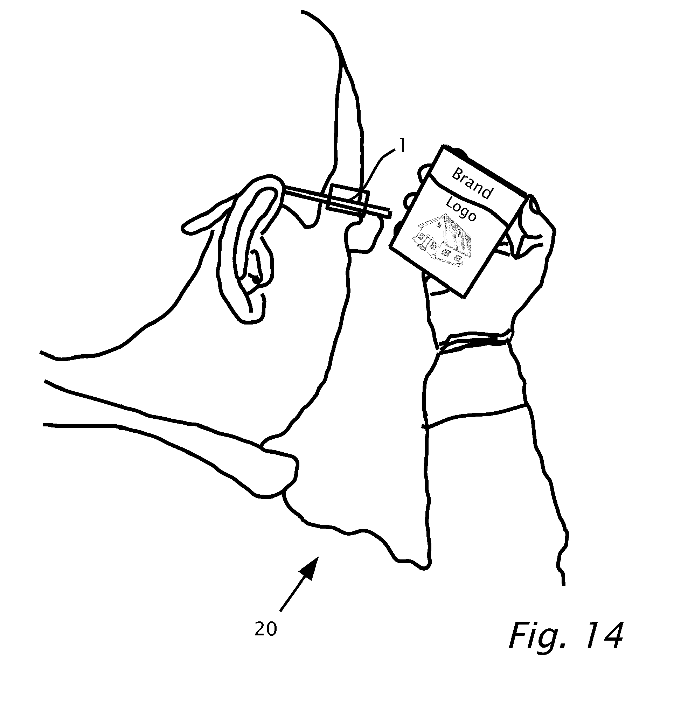

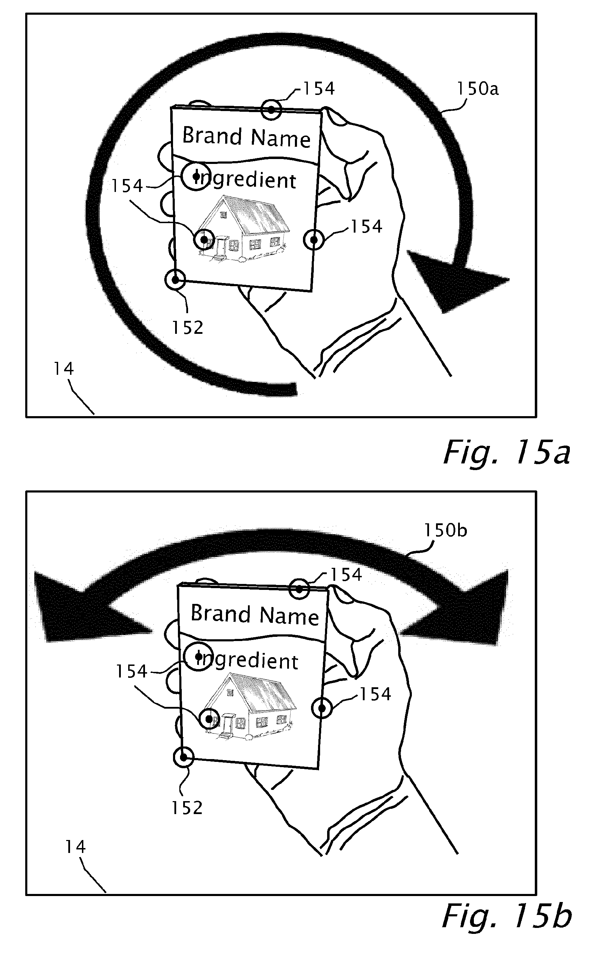

Reference is now made to Figure **14** which illustrates a user wearing device **1** and holding an object, *e.g.* a package of butter, in the field of view of camera **12.** A portion of an image frame **14** is shown in Figures 15a and 15b showing the user holding and/or moving the object. The type of movement of the object that the user may make, in successive captured image frames **14** may be repetitive: for instance, a circular movement **150a,** a side to side movement **150b,** and/or an up and down movement. Alternatively, there may be substantially no movement of the object. Figures 15a and 15b also illustrate features, *e.g.* corners **152** and edges or edge features **154** of the object which may be tracked by device 1 during the image motion

According to a feature of an embodiment of the present invention, device **1** determines that a user is holding an object that was previously held by the user, and device **1** re-recognizes the object. Device **1** may act responsive to the re-recognition and/or use re-recognition of the object as a control input.

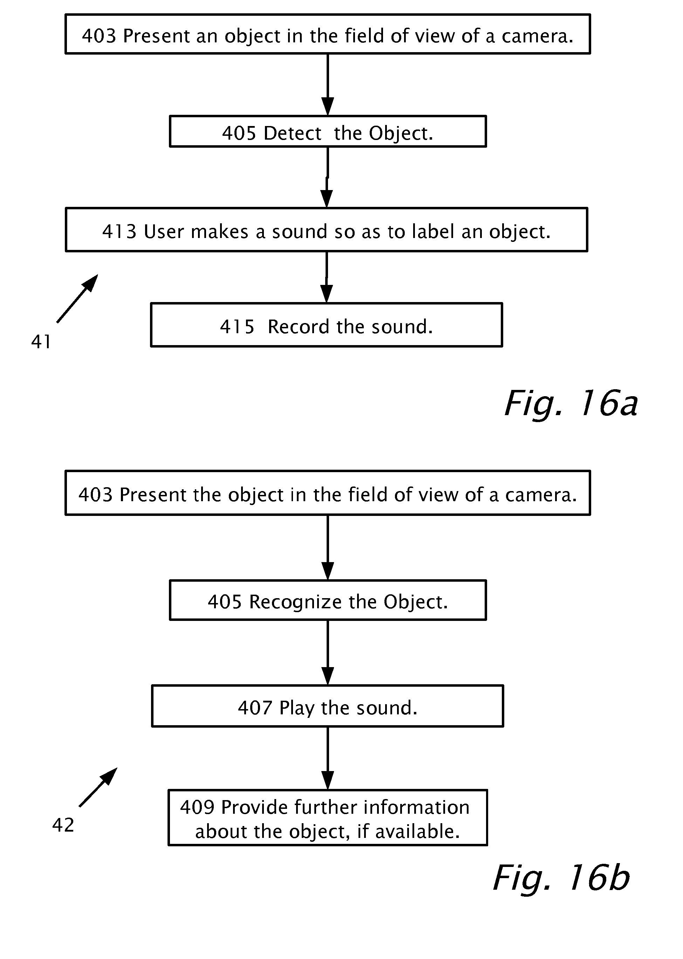

Reference is now made to Figures 16a and 16b which illustrate methods **41** and **42** respectively, according to embodiments of the present invention.

In method **41,** device **1** determines with high probability, that the user is presenting (step **403)** an object in the field of view of camera **12.** Device **1** may check whether the object is recognizable. Upon detecting or recognizing (step **405)** the object being presented, the user may name the object or make a sound to label the object (step **413)** and the sound may be recorded (step **415).** A feature of the present invention is that method **41** avoids a button press. Hand motion, such as waving the object in the field of view of camera **12** or inserting the object into the field of view is sufficient to indicate to device **1** that there is an object being presented (step **403)** for recognition (step **405).**

Referring now to Figure 16b, method **42** performs image-based matching in a way that is fast and flexible. The previously detected object is presented again (step **403 )** to camera **12** and image-based matching is performed so that the object is recognized (step **405)** as the same object that was previously detected. A unique aspect to device **1** is that a user can add objects. For example, a visually impaired user may not be able to identify the particular brand of yogurt she is interested in purchasing from the store shelf. Such a user may ask for assistance once, in order to find the product. She then presents the product to device **1** and subsequently the device will tell that product apart from others, making the shopping fast and pleasant to the user. Another example is a visually impaired person who pays using cash and needs to ensure that he/she receives the correct change, as device **1** may identify the bank notes and coins.

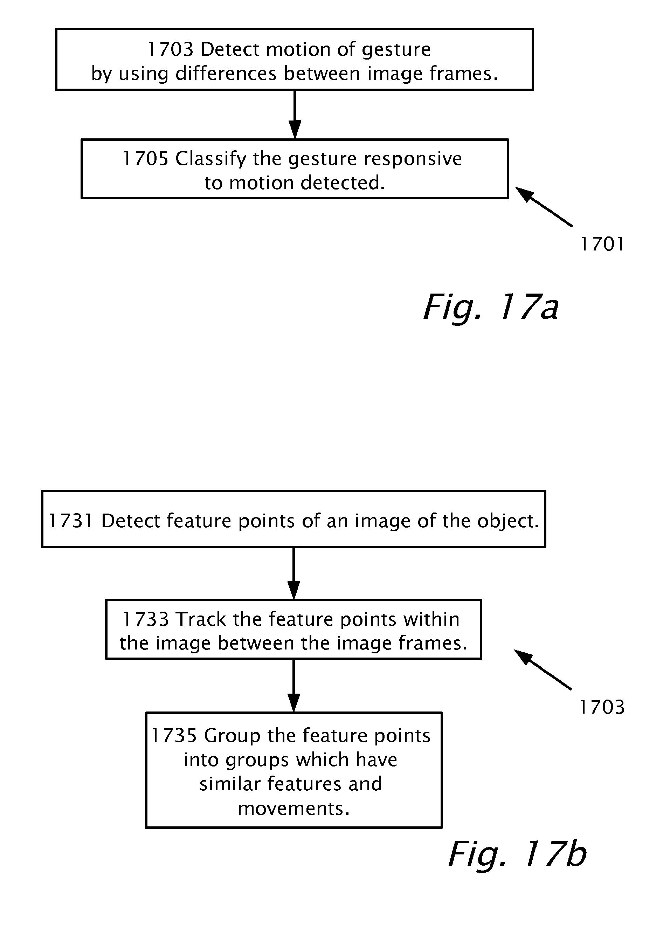

Reference is now made to Figure 17a which shows a flow diagram of a method **1701,** according to a feature of an embodiment of the present invention. In step **1703,** motion of an object held by a user of device **1** is detected using differences between image frames **14.** Based on the motion detected of the object between image frames in step **1703,** the object is classified in step **1705.** Alternative steps according to different embodiments of the present invention may follow classification step **1705.** A failure to classify the object may be audibly given to the user by audio unit **26.** A successful classification in step **1705** may allow the user to name the object (step **1707)** and record the name of the object. A successful re-recognition in step **1705** may allow the user to audibly hear from audio unit **26,** text being read aloud by using optical character recognition (OCR) of characters on the object.

Reference is now made to Figure 17b which shows an aspect of motion detection of a gesture ( step **1703** ) in greater detail, according to a feature of an embodiment of the present invention. In step **1731,** feature points of the object are detected as the object is held in the hand of the user and moved by the hand of the user. Referring again to again to Figures 15a, 15b, the feature points may be corners **152** and edge features **154** of the object. Corners **152** and edge features **154** may be provided by algorithms known in the art of image processing such as Scale-invariant feature transform (SIFT) or Harris corners. From the way the user holds the object in her hand, it may be understood that the object includes a gesture intended for control of device **1.** Alternatively or in addition, in step **1733,** the features such as corners **152** and edge features **154,** which may be found on the object and/ or the hand of the user holding the object, may be tracked by device **1** between image frames **14.** The features may be grouped ( step **1735** ) into groups which have similar features and movements. Repetitive motion of features **152, 154** may be used by device **1** to indicate a control input to device **1.**

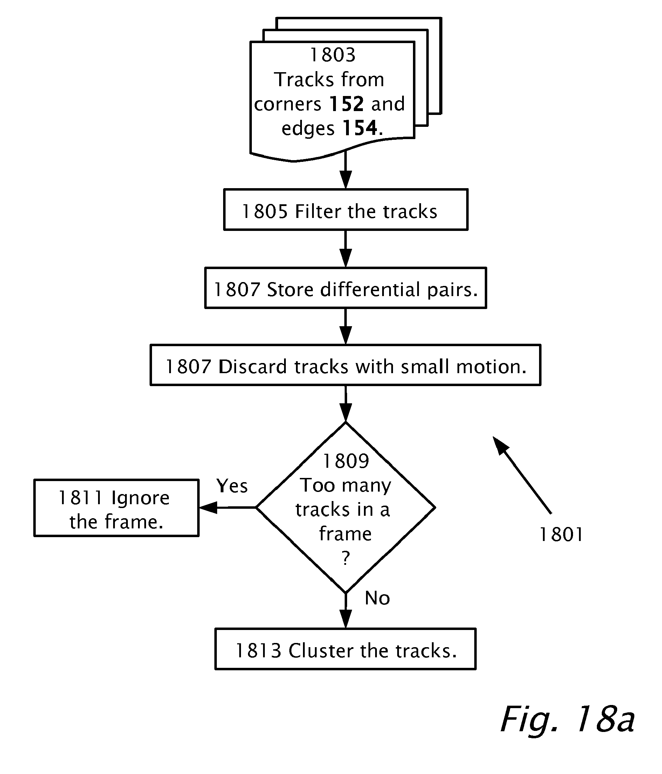

Reference is now made to Figure 18a which illustrates a flow diagram of a method **1801,** according to features of embodiments of the present invention for tracking image motion or tracking features of an object between image frames **14.** Method **1801** receives an input **1803** including tracks from features *e.g.* corners **152** and edges **154,** from a number *e,g,* 11, of previous image frames **14.** The tracks from the tracked features are filtered (step **1805)** and for each track, differential pairs (dx, dy) pairs *e.g.* 10 pairs are stored (step **1807),** where x and y are Cartesian axes in image space. Shorter tracks may be ignored and may be discarded (step **1807)** which have image motion below a threshold. In decision block **1809,** if too many tracks remain in an image frame **14,** image frame **14** may be ignored (step **1811),** indicating that camera **12** has probably moved during the exposure causing the background also to move. In this way, method **1801** achieves separation of the image of a moving object or gesture from the background.

In decision block **1809,** if not too many tracks remain in image frame **14,** the tracks are clustered (step **1813)** based on linear complexity.

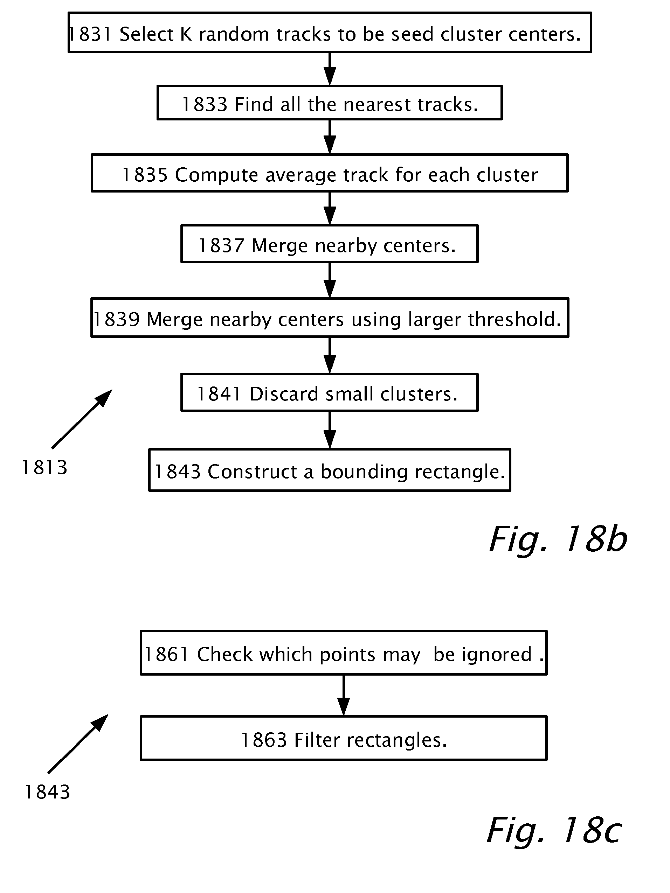

Reference is now made to Figure 18b which illustrates clustering step **1813** of Figure 18a in greater detail, according to a feature of an embodiment of the present invention. K random tracks selected to be used as seed cluster centers (step **1831).** Tracks nearest to the seed cluster centers may be found for each seed cluster center (up to a distance, *e.g.* 20*0.5, for an average 0.5 pixels per image frame **14.** The average track for each cluster is computed (step **1835).** Nearby cluster centers are merged (step **1837).** Nearby cluster centers may be merged again using a larger threshold (step **1839).** Small clusters of a few points in absolute number or percentage of total are discarded (step **1841)** after which a bounding rectangle is constructed (step **1843).**

Reference is now made to Figure 18c illustrating a flow diagram of step **1843** in greater detail of constructing a bounding rectangle. For each boundary direction (up, right, down, left) a check is performed for points which may be ignored (step **1861).** The points to be ignored are typically those whose removal significantly changes significantly the area of the bounding rectangle. Step **1861** is repeated a number, *e.g* 3, of times. The rectangles may be filtered (step **1863)** by (i) discarding rectangles that are too small (width, height), (ii) based on percentage of points from the cluster is too low compared to other tracks that lie inside the rectangle. Filtering may be performed according to the total number of tracks from features from the cluster inside the rectangle divided by the area of the rectangle.

### MULTI-FRAME FILTERING

With multiple frames, all the rectangles from the previous image frames **14** are input and the location and scales of each rectangle to the current image frame **14** frame are updated. The updating of the location and scales of each rectangle to the current image frame **14** frame may be performed done using random sample consensus (RANSAC) to estimate motion along the tracks. A candidate for each location is then selected. Selecting the candidate for each location chooses the rectangle that best covers all the other rectangle. When a new image frame **14** arrives, the candidate may change. Whether to classify this rectangle is decided on the basis of:
- if the homography indicates too large an image motion, then ignore the rectangle because the image might be blurry.
- rectangles are re-sent until there is one image in which the classifier gets a high score
- rectangles that failed too many times, are later ignored so as to save computing power.

### Definitions

The term "edge or "edge feature" as used herein refers to an image feature having in image space a significant gradient in gray scale or color.

The term "edge direction" is the direction of the gradient in gray scale or color in image space.

The term "detection" is used herein in the context of an image of a object and refers to recognizing an image in a portion of the image frame as that of a object, for instance a object of a visually impaired person wearing the camera. The terms "detection" and "recognition" in the context of an image of a object are used herein interchangeably, although detection may refer to a first instance and recognition may refer to a second or subsequent instance.

The term "motion detection" or detection of motion as used herein refers to detection of image motion a features of an object between image frames.

The term "image intensity" as used herein refers to either gray scale intensity as in a monochromatic image and/or one or more color intensities, for instance red/green/blue/, in a color image.

The term "classify" as used herein, refers to a process performed by a machine-learning process based on characteristics of an object to identify a class or group to which the object belongs. The classification process may also include the act of deciding that the object is present. Examples of classes of objects include buses, hand gestures, bank notes and traffic signals.

The term "classify a gesture" as used herein refers to recognizing the gesture as an input to the device.

The term 'field of view" (FOV) as used herein is the angular extent of the observable world that is visible at any given moment either by an eye of a person and/ or a camera. The focal length of the lens of the camera provides a relationship between the field of view and the working distance of the camera.

The term "attribute" as used herein, refers to specific information of the recognized object. Examples may include the state of a recognized traffic signal, or a recognized hand gesture such as a pointed object which may be used for a control feature of the device; the denomination of a recognized bank note is an attribute of the bank note; the bus number is an attribute of the recognized bus.

The term "tracking image motion" as used herein, refers to tracking an image over multiple image frames.

The term "frame front" as used herein refers to the front part of the eyeglass frame that holds the lenses in place and bridges the top of the nose.

The term "bone conduction" as used herein refers to the conduction of sound to the inner ear through the bones of the skull.

The objects of a hand are termed herein as follows: the first object is a thumb, the second object is also known herein as an "index object", the second object is known herein as an "index" object, the third object is known herein as a "middle object", the fourth object is known herein as "ring object" and the fifth object is known herein as "pinky" object.

The indefinite articles "a", "an" is used herein, such as "a candidate image", "an audible output" have the meaning of "one or more" that is "one or more candidate images" or "one or more audible outputs".

Although selected features of embodiments of the present invention have been shown and described, it is to be understood the present invention is not limited to the described features. Instead, it is to be appreciated that changes may be made to these features without departing from the principles of the invention, the scope of which is defined by the claims.

All optional and preferred features and modifications of the described embodiments and dependent claims are usable in all aspects of the invention taught herein. Furthermore, the individual features of the dependent claims, as well as all optional and preferred features and modifications of the described embodiments are combinable and interchangeable with one another.

The disclosures in United States patent application number 13/397,919 and European patent application number 12 275 016.9, from which this application claims priority, and in the abstract accompanying this application, are incorporated herein by reference.

## Claims

1. A method for visually assisting a person using a device wearable by the person, wherein the device includes a processor operatively connectible to a camera, wherein the processor is adapted to capture a plurality of image frames, the method comprising:
detecting motion of a gesture by using differences between the image frames;
classifying said gesture responsive to said detected motion.

2. The method of claim 1, wherein said motion of said gesture is repetitive.

3. The method of claim 1 or 2, wherein said detecting and said classifying are performed while avoiding pressing of a button on the device.

4. The method of any preceding claim, wherein said gesture includes holding an object in a hand of the person.

5. The method of claim 4, further comprising:
enabling the person to audibly name said object; and
recording said name.

6. The method of claim 4 or 5, wherein said gesture includes waving said object in the field of view of the camera.

7. The method of any of claims 4 to 6, further comprising classifying said object.

8. The method of any preceding claim, further comprising:
providing feedback to the person upon failing to classify said gesture.

9. The method of any preceding claim, wherein said gesture includes holding an object, the method further comprising:
training a classifier by audibly naming the object.

10. The method of any preceding claim, further comprising:
performing said detecting by identifying portions of a hand.

11. The method of any preceding claim, wherein said detecting motion includes:
tracking the image motion between said image frames;
grouping said image motion into groups, wherein said groups include similar image movement.

12. The method of any preceding claim, further comprising:
notifying the person of an attribute related to the gesture.

13. A device wearable by the person, wherein the device includes a processor operatively connectible to a camera, wherein the processor is adapted to capture a plurality of image frames, the device operable to :
detect motion of a gesture by using differences between the image frames;
classify said gesture responsive to said detected motion.

14. The device of claim 13, wherein said motion of said gesture is repetitive.

15. The device of claim 13 or 14, further comprising:
a bone conduction headphone operatively attached to said processor, wherein the device detects an object and recognizes the object, wherein said processor audibly informs the person by utilizing said bone conduction headphone to name said object.
